# DEMANDE DE BREVET EUROPEEN

(11) **EP 0 680 208 A1**
(43) Date de publication de la demande: **02.11.1995**
(21) Numéro de dépôt: 95400746.4
(22) Date de dépôt: 04.04.1995
(51) Int. Cl.: H04N 5/44

(54) **Procédé de production de programme d'image**

(30) Priorité: 26.04.1994 FR 9405024
(71) Demandeur: TELEDIFFUSION DE FRANCE, société anonyme, F-75015 Paris (FR)
(72) Inventeur: Lebrat, François, F-75016 Paris (FR); Fouillet, Jean-Marie, F-93330 Neuilly-sur-Marne (FR)
(74) Mandataire: Cabinet Martinet & Lapoux

(57) **Abrégé**

L'invention fournit un procédé de production d'un programme d'image résultant (PIp + PIa) à transmettre vers des récepteurs (RE1, RE2) possédant chacun l'un de premier et second formats d'écran différents. Chaque image du programme d'image résultant est associé à une information de signalisation (DS) qui est traitée dans chacun des récepteurs (RE1, RE2) pour restituer respectivement le programme d'image résultant lorsque ledit récepteur possède le premier format d'écran, et un programme d'image principal (PIp) inclus dans le programme d'image résultant lorsque le récepteur possède ledit second format. L'invention est caractérisée par
- la définition préalable des informations de signalisation (DS) pour les images successives respectives du programme d'image résultant, puis
- la juxtaposition du programme d'image principal (PIp) et d'un programme d'image annexe (PIa) en ledit programme résultant en fonction des informations de signalisation définies.

## Description

La présente invention concerne de manière générale un procédé de production d'image au format 16/9 mis en oeuvre préalablement à une diffusion, ou vidéotransmission, vers des récepteurs à écran d'image, tels que récepteurs de télévision.

La norme d'analyse 625/50/2 (625 lignes et 50 trames entrelacées par seconde, soit 25 images par seconde) définissant l'image de télévision actuelle sera remplacée progressivement par une norme de télévision à haute définition (TVHD) améliorant la qualité de l'image de télévision actuelle pour offrir au téléspectateur un confort visuel bien supérieur. Les caractéristiques déjà définies de la télévision TVHD consistent principalement en une définition très supérieure de l'image et un format d'écran élargi. Pour un récepteur de télévision conventionnel, le format d'écran est de 4/3, soit un rapport de la largeur sur la hauteur de l'écran sensiblement égal à 1,33. Pour la télévision TVHD, le format d'écran est élargi de 4/3, soit un format de rapport largeur/hauteur d'écran 16/9 sensiblement égal à 1,77. Ce format élargi augmente avantageusement le champ visuel du téléspectateur comparativement à celui offert par un récepteur conventionnel.

L'introduction de la technique TVHD ne peut être que progressive en raison du parc actuel considérable de récepteurs au format 4/3, du coût encore élevé des récepteurs de télévision TVHD, de la modification nécessaire des infrastructures de production et de diffusion existantes, et de la nécessité d'une harmonisation internationale.

Pour remédier à l'impossibilité d'introduire à court terme la technique TVHD chez le téléspectateur, il est apparu opportun de définir plus rapidement des nouveaux standards de télévision compatibles avec celui de la télévision conventionnelle, et connus du grand public sous les termes de "TéléVision à Qualité Améliorée" (TVQA). Ces termes "TéléVision à Qualité Améliorée" sous-entendent, comparativement à la télévision conventionnelle, un format d'image élargi égal à 16/9. Cette technique TVQA ne modifie néanmoins pas la définition, ou résolution, de l'image en ce que le nombre de lignes par image reste égal à 625.

L'introduction sur le marché de récepteurs de télévision TVQA obtient un succès non négligeable auprès du grand public et des sociétés de programme de télévision produisent aujourd'hui de nombreux programmes au format 16/9, qui sont diffusés par satellites et réseaux câblés. En raison de la compatibilité de la technique de balayage de ligne, à 625 lignes par image, de la télévision TVQA avec celle des récepteurs conventionnels, et sous la condition d'utiliser un décodeur D2-MAC configuré par le téléspectateur, chaque téléspectateur muni d'un récepteur au format 4/3 peut recevoir un programme au format 16/9 diffusé selon la norme D2-MAC/Paquet. Sur l'écran d'un tel poste 4/3 n'apparaît alors qu'une portion de l'image 16/9 diffusée.

Selon la norme de codage D2-MAC/Paquet et comme montré sur la figure 1, chaque image au format 16/9 I_{16/9} d'un programme diffusé est transmise en association avec une information de signalisation DS, dite information de panoramage. Cette information DS définit une coordonnée selon l'axe horizontal de l'image au format 16/9.

Dans un récepteur de télévision R_{16/9} au format d'écran 16/9, l'image I_{16/9} apparaît intégralement sur l'écran du récepteur après réception à travers une antenne 10 et un décodeur 11, indépendamment de l'information de signalisation DS.

Dans un récepteur de télévision R_{4/3} au format d'écran 4/3, l'image 16/9 reçue à travers une antenne 12 et un décodeur 13 n'est pas visualisée dans son intégralité sur l'écran au format 4/3, et seule apparaît une portion au format d'image 4/3 de ladite image I_{16/9}, ladite portion étant délimitée par des bornes équidistantes de la coordonnée définie par l'information de panoramage DS. Ainsi, l'information de signalisation DS définit une coordonnée centrale de ligne de la portion d'image au format 4/3 dans l'image I_{16/9}. Dans le décodeur 13 sont prévus des moyens pour supprimer des parties d'image situées respectivement à gauche et à droite de bornes équidistantes de la coordonnée définie par l'information de signalisation DS. Ces parties d'image forment ensemble une portion d'image de format 16/9 - 4/3 = 4/9 complémentaire à l'image 4/3 dans l'image 16/9 et ne sont pas visualisées dans un récepteur au format d'écran 4/3.

L'information de panoramage DS associée à chaque image 16/9 à transmettre est élaborée de la manière suivante. Lors d'une prise de vue, une scène est filmée de sorte que les images de la scène sont encadrées exactement par similitude dans un écran de format 16/9, indépendamment du format 4/3 des écrans sur lesquels ces images peuvent ultérieurement être visualisées. Puis sur la base de critères artistiques visant essentiellement à ne retenir qu'une portion d'intérêt au format 4/3 de la scène filmée au format 16/9 est définie une information de panoramage DS délimitant en largeur une portion d'image au format 4/3 dans chaque image 16/9. Cette information est ensuite diffusée après multiplexage temporel avec le signal d'image 16/9 codé en D2-MAC et conditionne le décodeur 13 pour ne fournir au récepteur de télévision P_{4/3} que ladite portion d'intérêt.

Dans ce qui précède, il n'est pas fait mention de la réception d'un signal d'image diffusé au format d'image 4/3 dans un récepteur R_{16/9} au format d'écran 16/9 afin de visualiser l'image au format 4/3. La vidéothèque existante de programmes de télévision, films et reportages, au format d'image 4/3 est très importante et ne peut être délaissée au seul motif d'une évolution en dimension du format d'écran des récepteurs de télévision.

A cet égard, la technique antérieure enseigne que les récepteurs de télévision au format d'écran 16/9 sont pourvus d'une touche de fonction qui, par simple sollicitation du téléspectateur, commande la commutation d'un mode de réception au format d'écran 16/9 vers un mode de réception au format d'écran 4/3, et inversement. Lorsqu'un signal d'image diffusé au format 4/3 est reçu par un récepteur de télévision au format d'écran 16/9 fonctionnant en mode de réception 4/3, alors l'image au format 4/3 est visualisée centralement sur l'écran au format 16/9 et encadrée par deux bandes latérales noires de dimensions égales. Ces diffusions au format d'image 4/3 de films ou reportages ne favorisent pas l'intérêt des téléspectateurs pour les nouveaux récepteurs de télévision au format d'écran 16/9.

La présente invention vise à remédier à cet inconvénient. Principalement, l'invention a pour objectif de produire des images au format 16/9 qui enrichissent sensiblement le contenu pictural des images actuellement reçues par le téléspectateur muni d'un récepteur au format 16/9 lors de la diffusion d'un programme d'image principal au format d'image 4/3. L'invention contribuera alors à stimuler l'intérêt de chaque téléspectateur pour un format d'écran plus grand, et à favoriser le développement du parc des récepteurs de télévision au format d'écran 16/9.

A cette fin, un procédé de production d'un programme d'image résultant à transmettre vers des récepteurs possédant chacun l'un de premier et second formats d'écran différents, des images dudit programme d'image résultant étant associées à des informations de signalisation respectives qui sont traitées dans chacun des récepteurs pour restituer respectivement le programme d'image résultant, lorsque ledit récepteur possède ledit premier format d'écran, et un programme d'image principal inclus dans le programme d'image résultant lorsque ledit récepteur possède ledit second format, est caractérisé préalablement par
- la définition desdites informations de signalisation,
- la combinaison dudit programme d'image principal et d'un programme d'image annexe en fonction desdites informations de signalisation pour former un programme d'image intermédiaire ayant ledit premier format d'image et définissant deux zones d'image respectivement occupées par ledit programme d'image principal établi audit second format d'écran et ledit programme d'image annexe, et
- l'insertion desdites informations de signalisation dans ledit programme d'image intermédiaire en ledit programme d'image résultant, lesdites informations de signalisation commandant une restitution uniquement dudit programme d'image principal dans un récepteur de télévision audit second format d'écran.

Une réalisation de l'invention concerne la télévision. Dans cette réalisation, d'une part chacun des récepteurs est un récepteur de télévision sur un écran duquel ledit programme résultant est destiné à être visualisé, et d'autre part les programmes d'image principal et annexe sont sous forme numérique. La combinaison comprend alors
une traitement d'interpolation dudit programme d'image principal en un programme d'image principal interpolé, et
un mélange dudit programme d'image principal interpolé et dudit programme d'image annexe en ledit programme d'image résultant.

Les premier et second formats correspondent respectivement aux formats standard de télévision 16/9 et 4/3, et un programme d'image annexe occupe une ou deux portions résiduelles du programme d'image résultant qui sont inoccupées par le programme d'image principal et qui possèdent ensemble un format d'image 4/9.

Selon une première variante, le programme d'image annexe est un programme d'image annexe réduit au format d'image 4/3 qui résulte de la réduction en dimension avec un coefficient égal à trois d'un programme d'image au format d'image 4/3, afin que ledit programme d'image annexe réduit occupe une portion d'image latérale au programme d'image principal restituée à droite ou à gauche sur un écran de récepteur au premier format d'écran.

Selon une seconde variante, le programme d'image annexe est un programme d'image annexe réduit au format d'image 16/9 qui résulte de la réduction en dimension avec un coefficient égal à quatre d'un programme d'image au format d'image 16/9, afin que ledit programme d'image annexe réduit occupe une portion d'image latérale au programme d'image principal restituée à droite ou à gauche sur un écran de récepteur au premier format d'écran.

Il peut être prévu une voie sonore annexe dans ledit programme d'image résultant qui est associée audit programme d'image annexe.

D'autres caractéristiques et avantages de la présente invention apparaîtront plus clairement à la lecture de la description suivante en référence aux dessins annexés correspondants dans lesquels :

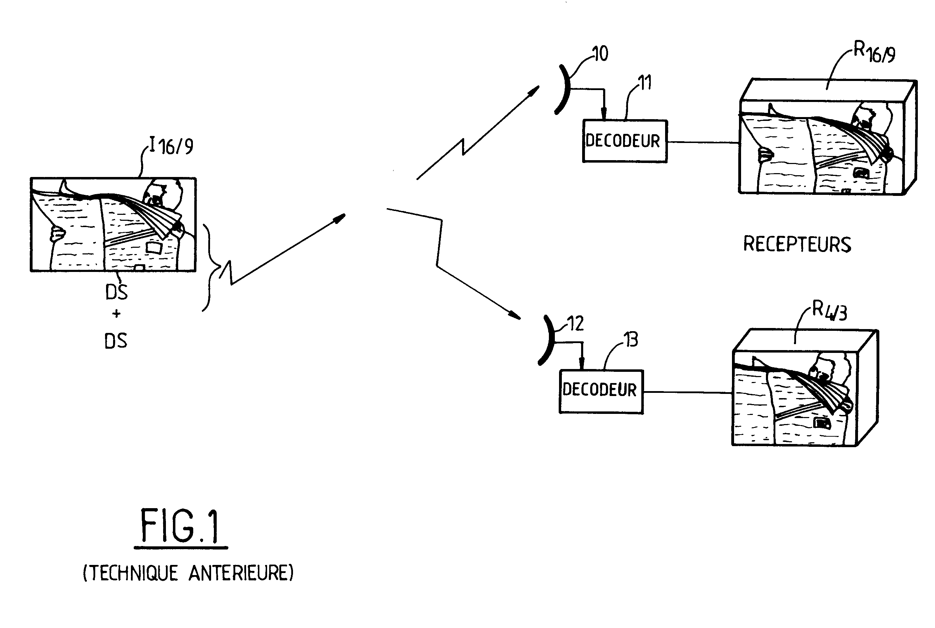

- la figure 1, déjà commentée, montre schématiquement la diffusion d'une image de format 16/9, et la réception de celle-ci par des récepteurs de télévision respectifs aux formats d'image 4/3 et 16/9 ;
- la figure 2 montre deux formats d'écran superposés ;
- la figure 3 illustre schématiquement le principe du procédé selon l'invention ; et
- la figure 4 montre des étapes de production d'un programme d'image résultant selon l'invention.

L'invention décrite ci-après en détail n'est pas limitée au seul domaine de la télévision et concerne toute application relative à une technique de vidéotransmission pour laquelle coexistent des récepteurs ayant des formats d'écran différents. Par exemple, l'invention est également dirigée vers les techniques de traitement vidéo informatique, pour lesquelles commencent à apparaître des formats d'écran de diverses tailles. L'invention fait appel dans tous les cas à un moyen de traitement d'information de signalisation configuré par l'usager en fonction du format d'écran de son récepteur. Ce moyen de traitement, à l'instar du décodeur D2-MAC, restitue l'image reçue dans son intégralité ou une portion de cette image en fonction du format d'écran du récepteur.

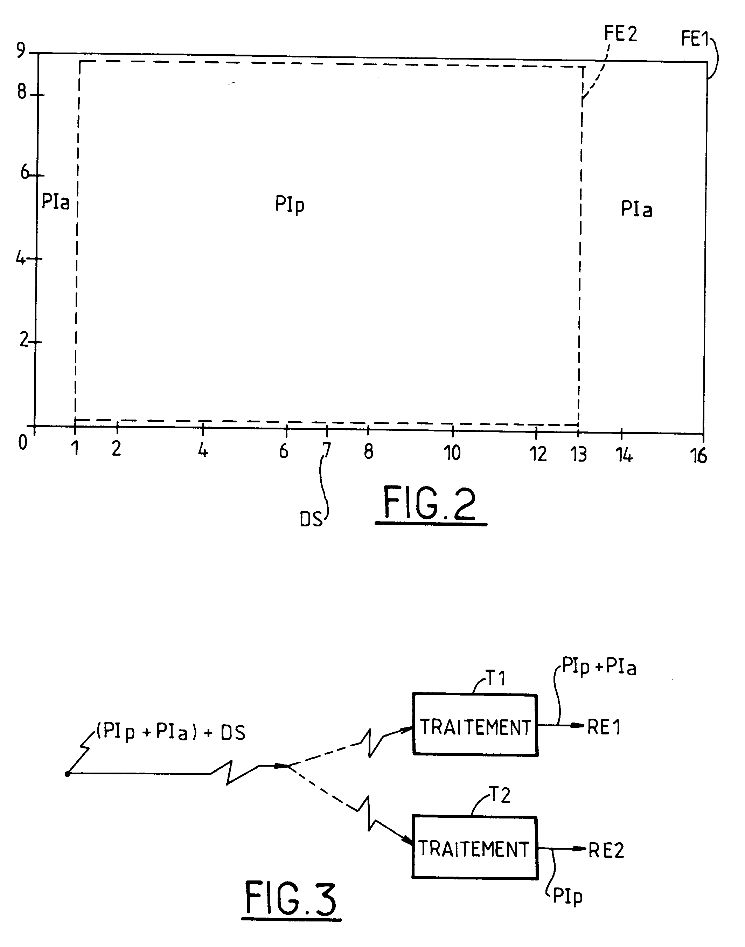

Dans la figure 2 sont illustrés deux formats d'écran FE1 et FE2 superposés et décentrés l'un par rapport à l'autre. L'écran au format FE1 appartient à un récepteur RE1, tel que récepteur R_{16/9} destiné à recevoir des images d'une dimension supérieure à la dimension des images normalement reçues par un récepteur RE2 à écran au format FE2, tel que récepteur R_{4/3}. Comme montré dans cette figure, et en prenant comme application la télévision et les formats d'écran associés FE1 = 16/9 et FE2 = 4/3, l'invention se distingue de la technique antérieure en ce qu'elle ne prévoit pas d'abord la production d'un programme d'image au format 16/9, puis la définition d'informations de signalisation, dites informations de panoramage, associées respectivement aux images du programme 16/9 et destinées à sélectionner une portion de chaque image du programme 16/9 coïncidant avec le format d'écran 4/3.

Selon l'invention, préalablement à toute production d'un programme d'image résultant, des informations de signalisation définissent dans le programme 16/9 produit ultérieurement, la portion de chaque image de programme 16/9 coïncidant avec le format d'écran 4/3. Une information de signalisation DS est prédéterminée pour chaque image du programme résultant au format 16/9 et fixe, dans chaque image du programme d'image résultant, l'emplacement d'un programme d'image principal PIp, seul visualisé sur un écran de récepteur R_{4/3} au format d'écran 4/3. Après définition des informations de signalisation DS, le programme d'image principal PIp est enrichi picturalement en lui juxtaposant un programme d'image annexe PIa qui n'est reçu que par les récepteurs au format d'écran 16/9. Typiquement, le programme d'image principal PIp est au format 4/3 et le programme d'image annexe PIa est au format 4/9. La juxtaposition des programmes d'image principal PIp et annexe PIa se traduit, en outre, par des opérations de combinaison de signaux d'image en télévision, ou d'addition de mémoires d'image en informatique.

En référence à la figure 3, des programmes d'image principal PIp et annexe PIa juxtaposés sont transmis à travers un réseau de télédiffusion par exemple par satellite et/ou câble pour une application de l'invention à la télévision, ou sont mémorisés pour une application informatique de l'invention, conjointement avec une information de signalisation DS pour chaque image. En réception, par des traitements respectifs inhibé T1 et activé T2 des informations de signalisation DS, sont délivrés respectivement le programme d'image principal PIp combiné avec le programme d'image annexe PIa et le programme d'image principal PIp uniquement. Ces programmes d'image (PIp + PIa) et PIp sont alors restitués sur des écrans de deux récepteurs RE1 et RE2 ayant des formats d'écran respectifs FE1 et FE2 qui sont différents.

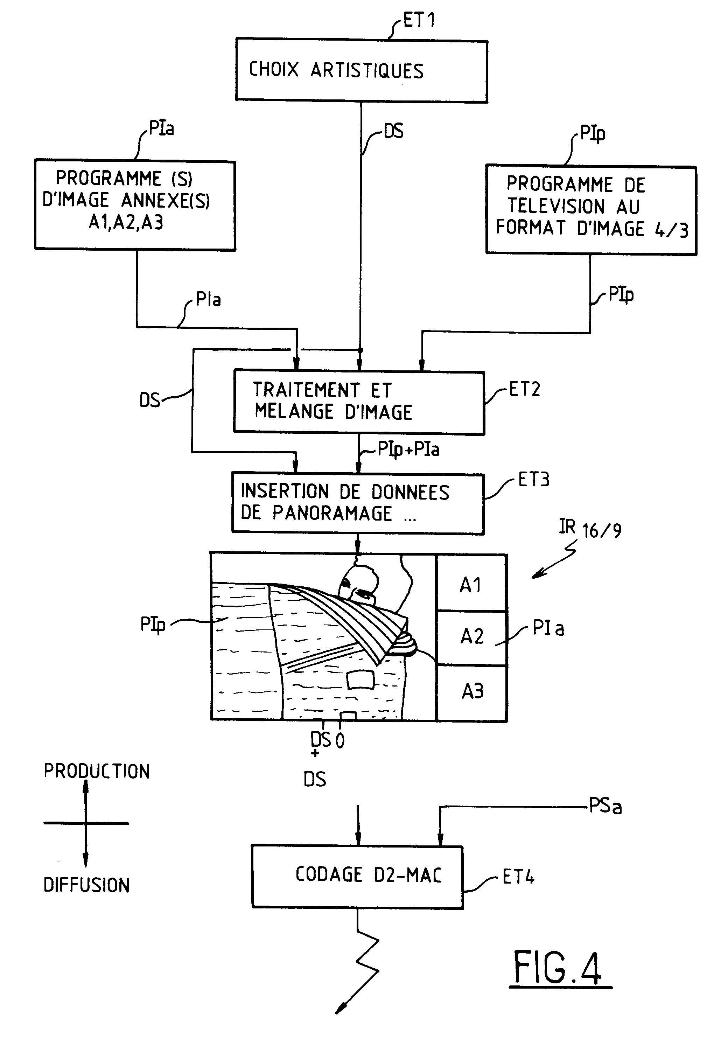

Dans la figure 4 sont représentées des étapes de procédé ET1 à ET4 selon l'invention relatives à la production d'un programme d'image résultant qui est au format 16/9 pour une application à la télévision, par exemple selon la norme de la télévision numérique professionnelle "4.2.2". Ces trois chiffres indiquent des proportions entre des fréquences d'échantillonnage de la composante de luminance et des deux composantes de chrominance dans un signal d'image. La norme 4.2.2 définit donc une numérisation séparée des composantes de luminance et de chrominance. Chaque ligne active d'un signal d'image selon cette norme comprend 720 points de luminance et 360 points de chacune des composantes de chrominance. Les traitements de combinaison nécessaires à la production d'un programme d'image résultant 16/9 selon l'invention sont numériques et consistent en des étapes d'interpolation d'un programme d'image principal et de mélange numérique d'un signal de programme principal interpolé résultant et de signal(aux) de programme(s) annexe(s).

A l'étape ET1 préalable à toute autre étape de procédé selon l'invention, une information de signalisation, dite information de panoramage, DS est définie pour chaque image d'un programme d'image résultant à produire au format 16/9. Chaque information de panoramage pour chaque image du programme d'image résultant est définie sur la base de critères artistiques. Une telle information de panoramage, définissant à l'avance la position du programme d'image principal PIp au format 4/3 dans le programme résultant pour une visualisation sur un récepteur au format 4/3, commande en conséquence la combinaison des programmes d'image principal PIp et annexe(s) PIa en le programme d'image résultant.

Des images du programme d'image principal PIp et d'un ou plusieurs programmes d'image annexes PIa sont ainsi combinées, selon l'étape ET2, en un programme d'image intermédiaire PIₚ + pIₐ, en fonction de l'information de signalisation DS préalablement définie. Les informations de signalisation repèrent la portion de format d'image 4/3 à sélectionner dans l'image résultante au format d'image 16/9 pour une visualisation sur un écran au format d'écran 4/3.

A titre d'exemple, le programme d'image principal PIp est au format d'image 4/3 et les programmes annexes sont en nombre égal à 3 et sont désignés par A1, A2 et A3. La combinaison, selon l'étape ET2, du programme d'image principal PIp et des programmes d'image annexes PIa est obtenue par un traitement d'interpolation du programme d'image principal et un mélange du programme principal interpolé résultant et des programmes d'image annexes, ces derniers étant si nécessaire préalablement réduits en dimension par interpolation.

Sachant que le nombre de points par ligne, typiquement 720, définissant une image au format d'image 4/3 est égal au nombre de points par ligne définissant une image au format d'image 16/9, il est prévu de traiter par interpolation en ligne le programme d'image principal PIp afin que le programme principal interpolé qui en résulte et qui définit le programme d'image au format 4/3 dans le programme d'image résultant au format 16/9 comprenne un nombre de points par ligne égal au rapport des largeurs respectives des formats d'écran 4/3 et 16/9, soit 3/4, multiplié par le nombre 720, soit 540.

Les programmes A1, A2 et A3 sont des programmes d'image ayant un format d'image 4/3. Ils sont réduits en dimension tout d'abord par interpolation en ligne et colonne d'image, par un coefficient égal à 3, puis ensuite par interpolation en ligne par un coefficient 4/3. Chaque programme d'image annexe ainsi réduit est défini par (720-540) = 180 points par ligne.

Le programme d'image principal interpolé et les programmes d'image annexes réduits sont ensuite mélangés afin que lesdits programmes d'image annexes réduits soient juxtaposés verticalement dans la portion de format 4/9 qui est inoccupée par le programme d'image principal interpolé au format d'image 4/3 dans un format d'image 16/9. Selon la réalisation illustrée dans la figure 4, les trois programmes d'image annexes A1, A2 et A3 sont ensemble juxtaposés latéralement à droite du programme d'image principal PIp, bien qu'ils puissent être visualisés à gauche sur un écran. Les programmes PIp et PIa ainsi mélangés en le programme intermédiaire (PIp + PIa) définissent un signal d'image au format 16/9.

A l'étape ET3, les informations de signalisation prédéfinies DS sont insérées respectivement dans des images successives du programme d'image intermédiaire (PIp + PIa) pour obtenir un signal de programme d'image résultant IR_{16/9}. Ce programme résultant est constitué des programme d'image principal PIp traité par interpolation, programme(s) d'image annexe(s) PIa réduits et des informations de signalisation DS. Chaque information de signalisation DS relative à une image donnée est de préférence incluse dans l'une des lignes de l'intervalle de suppression de trame du signal d'image de programme résultant d'une manière connue. Pour les besoins de la diffusion, le signal de programme d'image résultant IR_{16/9} incluant les informations de signalisation DS est codé suivant la norme de codage D2-MAC à l'étape ET4 en un signal résultant codé qui est diffusé vers des récepteurs de télévision RE1 et RE2 procédant à des traitements d'image T1 et T2 respectivement, comme déjà indiqué en référence à la figure 3.

Les moyens techniques nécessaires à la mise en oeuvre du procédé selon l'invention sont des moyens connus. Dans le cadre de signaux d'images numériques 4.2.2, l'étape ET2 est accomplie par des dispositifs vidéo pour effets spéciaux sous la forme de dispositifs d'interpolation et de mélangeurs de signaux numériques d'image de programme principal et de programme(s) annexe(s). Un dispositif d'interpolation réduit par un coefficient donné, en ligne et/ou en colonne, la dimension d'une image reçue. Un mélangeur compose, pour chaque période de ligne active du signal d'image au format 16/9 et en fonction de coefficients respectifs de pondération d'image, une ligne d'image du programme résultant à partir d'une ligne d'image du programme principal et d'une ligne d'image du programme annexe réduit ou de l'un des programmes annexes réduits.

Le procédé selon l'invention n'est pas limité aux étapes montrées à la figure 4.

Selon un autre exemple, le programme d'image principal PIp est au format d'image 4/3 et les programmes d'image annexes PIa au nombre de un à quatre sont au format d'image 16/9. L'étape ET2 consiste alors en:
un traitement par interpolation du programme d'image principal de telle sorte que le programme d'image interpolé résultant soit défini par 540 points par ligne et un format d'image 4/3,
une réduction par interpolation en ligne et colonne avec un coefficient égal à quatre du programme ou des programmes d'image annexes, et
un mélange des programme principal traité par interpolation et programme(s) annexe(s) réduit(s) de telle sorte que le(s) programme(s) d'image annexe(s) au format 16/9 soient disposés latéralement à droite ou à gauche du programme d'image principal interpolé.

Selon encore un autre exemple, le programme principal PIp n'occupe pas la partie droite ou gauche d'un écran au format 16/9. Il peut occuper comme montré dans la figure 2, en fonction des informations de signalisation prédéfinies DS, toute portion choisie au format d'écran 4/3 situé a priori à un emplacement quelconque dans un écran au format 16/9. Ces informations de signalisation sont alors utilisées au cours du mélange des programmes d'image principal traité et annexe(s) pour définir les positions relatives des programmes d'image principal et annexe(s) dans le programme d'image résultant à visualiser sur un écran d'un récepteur de télévision au format 16/9. S'il est souhaité que le programme d'image principal ne soit pas situé strictement à droite ou à gauche d'un écran de récepteur au format 16/9, le programme d'image annexe PIa occupe, comme montré dans la figure 2, deux parties d'image, à droite et à gauche du programme d'image principal PIₚ.

D'une manière générale, lorsque les programmes d'image principal et annexe(s) sont aux formats d'image 4/3 ou 16/9, d'une part le programme d'image principal est traité par interpolation, et d'autre part les images constituant le(s) programme(s) d'image annexe(s) sont réduites par interpolation, en ligne et colonne, selon un (des) coefficient(s) tel(s) que le(s) programme(s) d'image annexe(s) réduit(s) qui en résulte(nt) soi(en)t de dimension(s) inférieure(s) ou égale(s) à la partie d'image ou aux deux parties d'image du programme résultant PIp + PIa inoccupée(s) par le programme principal PIp traité. Après cette réduction par interpolation, les programme d'image principal traité et programme(s) d'image annexe(s) réduit(s) sont mélangés en fonction des informations de signalisation.

Néanmoins, les programmes d'image annexes ne sont pas nécessairement des programmes d'image de télévision, tels que films ou reportages. Selon d'autres exemples, un programme d'image annexe consiste en un texte descriptif du programme d'image principal, tel que titre ou générique, un graphisme descriptif, une image animée, ou encore une zone de mire utile à une application pour la télévision interactive.

Selon une caractéristique de l'invention, sachant que la norme de codage D2-MAC prévoit quatre voies numériques sonores dans le signal d'image codé D2-MAC, un programme sonore annexe PSa qui est associé à un programme d'image annexe PIa dans l'image résultante est inséré dans l'une des quatre voies sonores qui est libre au cours de l'étape du codage D2-MAC.

## Revendications

**1 -** Procédé de production d'un programme d'image résultant (PIp + PIa) à transmettre vers des récepteurs (RE1, RE2) possédant chacun l'un de premier et second formats d'écran différents (FE1, FE2), des images dudit programme d'image résultant (IR_{16/9}) étant associées à des informations de signalisation respectives (DS) qui sont traitées dans chacun des récepteurs (RE1, RE2) pour restituer respectivement le programme d'image résultant (IR_{16/9}) lorsque ledit récepteur possède ledit premier format d'écran (FE1), et un programme d'image principal (PIp) inclus dans le programme d'image résultant lorsque ledit récepteur possède ledit second format (FE2), caractérisé préalablement par
- la définition (ET1) desdites informations de signalisation (DS),
- la combinaison (ET2) dudit programme d'image principal (PIp) et d'un programme d'image annexe (PIa) en fonction desdites informations de signalisation (DS) pour former un programme d'image intermédiaire (PIp + PIa) ayant ledit premier format d'image (FE1) et définissant deux zones d'image respectivement occupées par ledit programme d'image principal établi audit second format d'écran (FE2) et ledit programme d'image annexe, et
- l'insertion (ET3) desdites informations de signalisation dans ledit programme d'image intermédiaire (PIp + PIa) en ledit programme d'image résultant (IR_{16/9}), lesdites informations de signalisation commandant une restitution uniquement dudit programme d'image principal (PIp) dans un récepteur (RE2 = R_{4/3}) audit second format d'écran (FE2).

**2 -** Procédé conforme à la revendication 1, selon lequel chacun desdits récepteurs est un récepteur de télévision sur un écran duquel ledit programme résultant est destiné à être visualisé, et lesdits programmes d'image principal et annexe (PIp, PIa) sont sous forme numérique, caractérisé en ce que ladite combinaison (ET2) comprend
un traitement d'interpolation dudit programme d'image principal (PIp) en un programme d'image principal interpolé, et
un mélange dudit programme d'image principal interpolé et dudit programme d'image annexe (PIa) en ledit programme d'image résultant.

**3 -** Procédé conforme à la revendication 1 ou 2, caractérisé par des premier et second formats (FE1, FE2) respectivement aux formats standard de télévision 16/9 et 4/3, et par un programme d'image annexe (A1, A2, A3) occupant une ou deux portions résiduelles du programme d'image résultant qui sont inoccupées par le programme d'image principal et qui possèdent ensemble un format d'image 4/9.

**4 -** Procédé conforme aux revendications 2 et 3, caractérisé en ce que ledit programme d'image annexe (PIa) est un programme d'image annexe réduit au format d'image 4/3 qui résulte de la réduction en ligne et colonne avec un coefficient égal à trois, puis en ligne avec un coefficient égal à 4/3, d'un programme d'image au format d'image 4/3, afin que ledit programme d'image annexe réduit occupe une portion d'image latérale au programme d'image principal qui est restituée à droite ou à gauche sur un écran de récepteur (RE1 = RE_{16/9}) au premier format d'écran (FE1).

**5 -** Procédé conforme aux revendications 2 et 3, caractérisé en ce que ledit programme d'image annexe (PIa) est un programme d'image annexe réduit au format d'image 16/9 qui résulte de la réduction en ligne et colonne avec un coefficient égal à quatre d'un programme d'image au format d'image 16/9, afin que ledit programme d'image annexe réduit occupe une portion d'image latérale au programme d'image principal qui est restituée à droite ou à gauche sur un écran de récepteur (RE1 = RE_{16/9}) au premier format d'écran (FE1).

**6 -** Procédé conforme à l'une quelconque des revendications 1 à 5, caractérisé par une voie sonore annexe (PSa) dans ledit programme d'image résultant qui est associée audit programme d'image annexe.
